# EUROPÄISCHE PATENTANMELDUNG

(11) **EP 2 023 455 A1**
(43) Veröffentlichungstag der Anmeldung: **11.02.2009**
(21) Anmeldenummer: 07015723.5
(22) Anmeldetag: 09.08.2007
(51) Int. Cl.: H02B 1/30, A47B 47/00, F16B 12/50

(54) **Montagesystem**

(60) Teilanmeldung: 08011413.5
(71) Anmelder: ISL media Singapore PTE LTD, Singapore 059413 (SG)
(72) Erfinder: Wellhöfer, Stefan, 99195 Schlossvippach (DE)
(74) Vertreter: Wächter, Jochen

(57) **Zusammenfassung**

Die Erfindung betrifft ein Montagesystem (1) mit mehreren miteinander verbundenen Profilstäben (2), die jeweils mindestens einen nach außen offenen Klemmkanal (4) mit einer Bodenfläche und zwei Seitenflächen (16) aufweisen, außerdem mit einem länglichen oder abgewinkelten Verbindungselement (6), das zwei gegenüberliegende, zumindest abschnittsweise gerade Klemmaußenflächen (8) und eine sich zwischen den Klemmaußenflächen (8) erstreckende Dehnungsfuge (10) aufweist und in den Klemmkanal (4) eingeführt ist, und mit mindestens einem Spreizelement (12), das in zumindest einen Abschnitt der Dehnungsfuge (10) derart eingebracht ist, dass die Klemmaußenflächen (8) des Verbindungselements mit den Seitenflächen (16) des Klemmkanals (4) mindestens eines Profilstabs (2) verklemmt sind.

## Beschreibung

Die Erfindung betrifft ein Montagesystem, das mehrere Profilstäbe universell miteinander verbindet, und insbesondere ein Montagesystem für einen Leichtbaurahmen, der einen flachen Körper mit hohem Kraftschluss und exakt fixiert.

Derartige Montagesysteme für Leichtbaurahmen sind seit langem bekannt und werden beispielsweise zur Halterung von elektrischen bzw. elektronischen Geräten eingesetzt. EP-1 420 140-A1 offenbart einen Rahmen zur Halterung eines flachen Körpers, wobei die Profilstäbe mittels eines umlaufenden Spannelements zusammengehalten werden, das die Profilstäbe von der Innenseite des Rahmens her miteinander verspannt. Derartige Montagesysteme weisen den Nachteil auf, dass die Haltekraft, mit der das elektrische bzw. elektronische Gerät festgehalten wird, an den Verbindungsstellen beschränkt ist. Für einen Einsatz im Freien und große Belastungen aufgrund des Eigengewichts des zu tragenden Gerätes sind derartige Montagesysteme schlecht geeignet.

Der vorliegenden Erfindung liegt daher die Aufgabe zu Grunde, ein Montagesystem bereitzustellen, welches universell für die Aufnahme von flachen Körpern geeignet ist, eine höchstmögliche Festigkeit an den Verbindungsstellen der Profilstäbe bietet, eine hohe Lebensdauer aufweist, große Belastungen auch beim Einsatz im Freien aushält sowie schnell und kostengünstig herzustellen und zu montieren ist.

Diese Aufgabe wird durch die Merkmale des Anspruchs 1 gelöst.

Demnach wurde ein Montagesystem geschaffen mit mehreren miteinander verbundenen Profilstäben, die jeweils mindestens einen nach außen offenen Klemmkanal mit einer Bodenfläche und zwei Seitenflächen aufweisen, mit einem Verbindungselement, das zwei gegenüberliegende, zumindest abschnittsweise gerade Klemmaußenflächen und eine sich zwischen den Klemmaußenflächen erstreckende Dehnungsfuge aufweist und in den Klemmkanal eingeführt ist, und mit mindestens einem Spreizelement, das in zumindest einen Abschnitt der Dehnungsfuge derart eingebracht ist, dass die Klemmaußenflächen des Verbindungselements mit den Seitenflächen des Klemmkanals mindestens eines Profilstabs verklemmt sind. Die Länge der Dehnungsfugenabschnitte hängt von der gewünschten Klemmkraft ab, mit der die Elemente miteinander verpresst werden.

Vorteilhafter Weise ist die Dehnungsfuge abschnittsweise verbreitert und weist dort Öffnungen zum Einführen der Spreizelemente auf. Die Verbreiterungen können bezüglich der Dehnungsfugenachse asymmetrisch angeordnet sein, wobei zusätzlich zur Vertikalkomponente der Klemmkraft eine Horizontalkomponente tritt.

Mit weiterem Vorteil weisen die Seitenflächen des Klemmkanals zumindest teilweise eine erste Riffelung auf und die Klemmaußenflächen des Verbindungselements weisen zumindest teilweise eine zweite Riffelung auf, die quer zur ersten Riffelung verläuft, so dass durch das Verklemmen eine Art dauerhafter Kaltschweißverbindung zwischen den Seitenflächen des Klemmkanals und den Klemmaußenflächen des Verbindungselements gebildet ist. Eine derartige Riffelung ist fertigungstechnisch mit geringem Aufwand herzustellen. Die erste und zweite Riffelung ist von der Größenordnung derart ausgebildet, dass durch das Aneinanderliegen der Riffelungen im Wesentlichen im rechten Winkel zueinander ein hoher Kraftschluss entsteht. Je nach Material geben die Längs- und Querrippen der Riffellungen mittels Verformung etwas nach, wenn sie miteinander verpresst werden.

Mit besonderem Vorteil ist das Spreizelement als Spreizniet, Kerbnagel, Schraube oder dergleichen ausgebildet. Derartige Verbindungskomponenten sind sehr kostengünstig und in unterschiedlichsten Größen und Materialausführungen verfügbar.

Vorteilhafterweise ist das Spreizelement aus Edelstahl ausgebildet. Mit weiterem Vorteil sind die Profilstäbe und das Verbindungselement aus dem gleichen Material, vorzugsweise aus Aluminium ausgebildet. Dadurch wird beim Verpressen der Längs- und Querrippen der entsprechenden Riffelungen eine besonders hohe Festigkeit durch hohen Kraftschluss erzielt. Des Weiteren sind Profile aus Aluminium schnell und kostengünstig herstellbar. Insbesondere ist die Herstellung der Verbindungselemente flexibel je nach Tiefe des Klemmkanals anpassbar. Alternativ können die Profilstäbe und das Verbindungselement beispielsweise aus Kunststoff ausgebildet sein.

Mit Vorteil weist das Verbindungselement an den Stirnseiten ein dehnbares Abschlusselement auf, das die Dehnungsfuge überdeckt. Das dehnbare Abschlusselement hat die Funktion eines flexiblen Federelements und ist geeignet, eine Ausweitung der Dehnungsfuge beim Eintreiben der Spreizelemente zu berücksichtigen.

Mit besonderem Vorteil sind die Profilstäbe an den zu verbindenden Ecken um 45 Grad abgeschrägt und winkelig aneinander gereiht, und das Verbindungselement ist als winkelförmiges Verbindungselement ausgebildet. Damit kann eine Verbindung von Profilstäben erzielt werden, die im Wesentlichen um 90 Grad zueinander angeordnet sind, wie es üblicher Weise bei Rahmenkonstruktionen der Fall ist. Eine übliche viereckige Rahmenkonstruktion mit vier Profilstäben kann damit mit vier winkelförmigen Verbindungselementen erzielt werden. Alternativ können auch Verbindungen von Profilstäben mit anderen Winkeln als 90 Grad hergestellt werden. Entsprechend wird dazu eine Abschrägung der Profilstäbe um im Wesentlichen die Hälfte des Verbindungswinkels des Verbindungselements bereitgestellt.

Mit weiterem Vorteil sind zwei Profilstäbe mit geraden Enden senkrecht miteinander verbunden und mindestens ein Profilstab weist zwei gegenüberliegende, in den Klemmkanal hineinragende Vorsprungsleisten auf, die in eine Nut greifen, welche im Bereich der Klemmaußenflächen angeordnet ist. Dadurch sind nicht nur Verbindungen von Profilstäben möglich, deren Stirnseiten jeweils miteinander verbunden werden, sondern auch Verbindungen von zwei Profilstäben, wobei einer der Profilstäbe stirnseitig mit dem Klemmkanal des anderen Profilstabs zur offenen Seite hin verbunden wird. Eine derartige Verbindung kann entweder mit hohem Kraftschluss fest oder auch in Längsrichtung des einen Klemmkanals verschiebbar ausgeführt sein.

Mit weiterem Vorteil umfasst die vorliegende Erfindung ein Flächentragelement mit einem erfindungsgemäßen Montagesystem und einem von den Profilstäben gehaltenen, im Wesentlichen flachen Körper, vorzugsweise einem Solarpanel. Flächentragelemente zur Halterung von Solarpanels müssen eine sehr hohe Tragfähigkeit und Festigkeit an den Verbindungsstellen aufweisen, eine hohe Lebensdauer besitzen und aufgrund der Anordnung im Freien eine große Belastung aushalten. Diese Randbedingungen werden durch das erfindungsgemäße Montagesystem bei einem derartigen Flächentragelement erfüllt.

Weitere Einzelheiten, Merkmale und Vorteile der vorliegenden Erfindung ergeben sich aus der nachfolgenden ausführlichen Beschreibung unter Bezugnahme auf die Zeichnungen.
- Fig. 1: ist eine perspektivische Ansicht einer ersten Ausführungsform des erfin- dungsgemäßen Montagesystems, wobei zwei Profilstäbe stirnseitig miteinan- der verbunden werden können;
- Fig. 2: ist eine perspektivische Ansicht der Ausführungsform aus Fig. 1, wobei zwei Profilstäbe, die je zwei Klemmkanäle aufweisen, mit jeweils einem Verbin- dungselement in jedem Klemmkanal miteinander verbunden sind;
- Fig. 3: ist eine Seitenansicht eines Verbindungselements gemäß der in den Fig. 1 und 2 dargestellten ersten Ausführungsform der Erfindung;
- Fig. 4: ist eine Seitenansicht eines Details des Verbindungselements aus Fig. 3;
- Fig. 5: ist eine perspektivische Ansicht einer zweiten, bevorzugten Ausführungsform des erfindungsgemäßen Montagesystems, wobei zwei im rechten Winkel zu- einander angeordnete Profilstäbe mittels eines winkeligen Verbindungsele- mentes miteinander verbunden sind;
- Fig. 6: ist eine Seitenansicht des winkelförmigen Verbindungselementes aus Fig. 5;
- Fig. 7: ist eine perspektivische Ansicht des winkelförmigen Verbindungselements aus Fig. 5;
- Fig. 8: ist eine perspektivische Ansicht einer dritten Ausführungsform des erfin- dungsgemäßen Montagesystems, wobei zwei Profilstäbe in T-Anordnung miteinander verbunden sind;
- Fig. 9: ist eine Seitenansicht der in Fig. 8 dargestellten dritten Ausführungsform des erfindungsgemäßen Montagesystems;
- Fig. 10: ist eine Seitenansicht des Verbindungselements, das in der in den Fig. 8 und 9 dargestellten dritten Ausführungsform verwendet wird; und
- Fig. 11: ist eine Querschnittansicht des Verbindungselements aus Fig. 10.

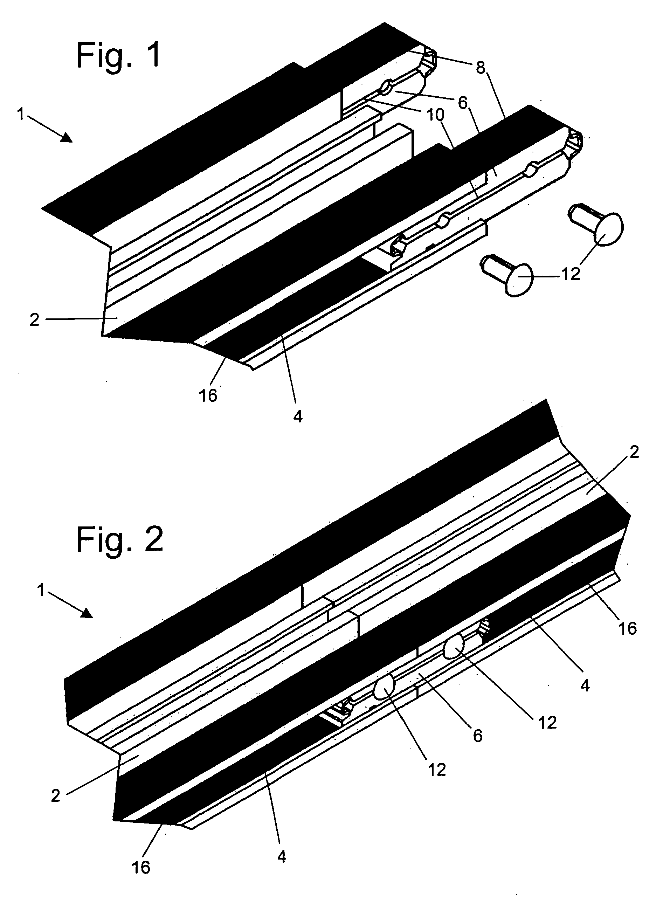

Fig. 1 zeigt eine perspektivische Ansicht einer ersten Ausführungsform des erfindungsgemäßen Montagesystems 1. In dieser Darstellung ist das Montagesystem nicht mit zwei verbundenen Profilstäben dargestellt, sondern der Anschaulichkeit halber nur ein Profilstab 2 mit zwei Klemmkanälen 4 (einer davon ist nicht sichtbar), in die jeweils ein Verbindungselement 6 eingeführt ist. Die Verbindungselemente 6 sind von der Stirnseite des Profilstabs 2 in die Klemmkanäle 4 im Wesentlichen bis zur Hälfte ihrer Länge eingeführt. Die Verbindungselemente 6 weisen Klemmaußenflächen 8 auf, von denen in Fig. 1 bei beiden Verbindungselementen 6 nur eine sichtbar ist. Beide Verbindungselemente 6 weisen eine Dehnungsfuge 10 auf, die in der dargestellten Ausführungsform bei beiden Verbindungselementen 6 an zwei Stellen zu einer Öffnung verbreitert ist. In diese Öffnungen können die Spreizelemente 12 eingeführt werden, die in Fig. 1 als Spreiznieten ausgeführt sind.

Fig. 2 zeigt in perspektivischer Ansicht die Ausführungsform aus Fig. 1, wobei hier zwei Profilstäbe 2, die stirnseitig aneinander stoßen, in verbundenem Zustand dargestellt sind. Die Verbindungselemente 6 (lediglich eines ist aufgrund der Darstellung sichtbar) sind im Wesentlichen zur Hälfte in die jeweiligen Klemmkanäle 4 eingeführt und sind aufgrund der Klemmung durch die Spreizelemente 12, die vollständig in die Öffnungen über deren gesamte Länge eingetrieben sind, als fixierte Verbindungselemente ausgeführt. In der dargestellten Ausführungsform weisen die Seitenflächen 16 des Klemmkanals 4 auf der Innenseite des Klemmkanals 4 eine erste Riffelung 18 in Längsrichtung auf, und das Verbindungselement 6 weist auf den Klemmaußenflächen 8 eine zweite Riffelung 20 in Querrichtung auf. Die besonders hohe Festigkeit der Verbindung ist insbesondere durch eine Art dauerhafter Kaltschweißverbindung zwischen den beiden Riffelungen 18, 20 der Seitenflächen 16 des Klemmkanals 4 bzw. der Klemmaußenflächen 8 des Verbindungselements 6 gewährleistet, die durch die Verpressung entsteht.

Sowohl die Profilstäbe 2 als auch die Verbindungselemente 6 sind in der dargestellten Ausführungsform in Aluminium ausgeführt, so dass durch das Aufeinanderpressen der im Wesentlichen senkrecht zueinander verlaufenden Riffelungen ein hoher Kraftschluss entstehen kann. Ein weiterer Vorteil der gleichen Materialpaarung von Verbindungselement 6 und Profilstab 2 ist die Vermeidung von Korrosion bei Einsatz im Freien.

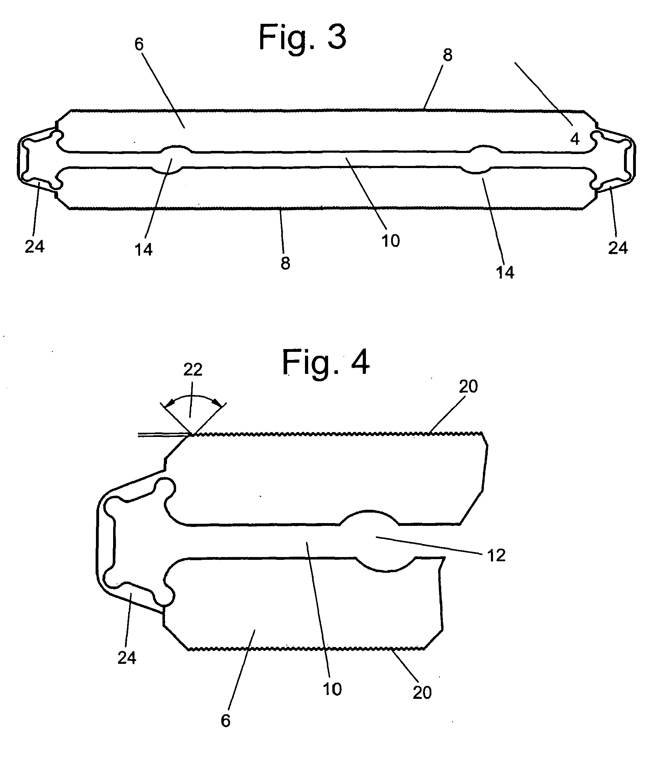

Fig. 3 zeigt eine Seitenansicht des in der ersten Ausführungsform aus Fig. 1 und 2 verwendeten Verbindungselementes 6. Die Dehnungsfuge 10 ist auf jeder Seite an zwei Stellen verbreitert, wodurch sich die Öffnungen 14 ergeben, in die die Spreizelemente 12 eingeführt werden können. In der hier dargestellten Ausführungsform sind die Öffnungen 14 jeweils asymmetrisch bezüglich der Dehnungsfugenlängsachse. Dies hat den Vorteil, dass sich bei Einführen von Spreizelementen 12 in die Öffnungen 14 die Klemmaußenflächen 8 des Verbindungselementes 6 nicht nur in Vertikalrichtung, sondern auch horizontal in entgegengesetzten Richtungen bewegen, wodurch eine besonders hohe Festigkeit des Verbindungselementes 6 mit dem Klemmkanal 4 im verklemmten Zustand erreicht wird. An den Längsenden weist das Verbindungselement 6 jeweils ein dehnbares Anschlusselement 24 auf, das die unterschiedliche Längsbewegung der Klemmaußenflächen 8 bei Verklemmung durch seine federartige Dehnungseigenschaft ohne Festigkeitsverlust der Verbindung ausgleichen kann.

Das Verbindungselement 6 wird kostengünstig aus Aluminium hergestellt. Je nach Tiefe des Klemmkanals 4 des Profilstabs 2 kann die Breite des Verbindungselementes 6 in flexibler Art und Weise dimensioniert werden.

In Fig. 4 ist eine Seitenansicht eines Ausschnitts eines Endes des in Fig. 3 dargestellten Verbindungselementes 6 zu sehen. Die zweite Riffelung 20 der Klemmaußenfläche 8 des Verbindungselementes 6 ist derart ausgebildet, dass der Winkel 22 zwischen den Anstiegs-und Abstiegsflanken der Riffelung 20 etwa 90 Grad beträgt. Andere Winkelbeträge sind je nach verwendetem Material und gewünschter Festigkeit der Klemmung möglich.

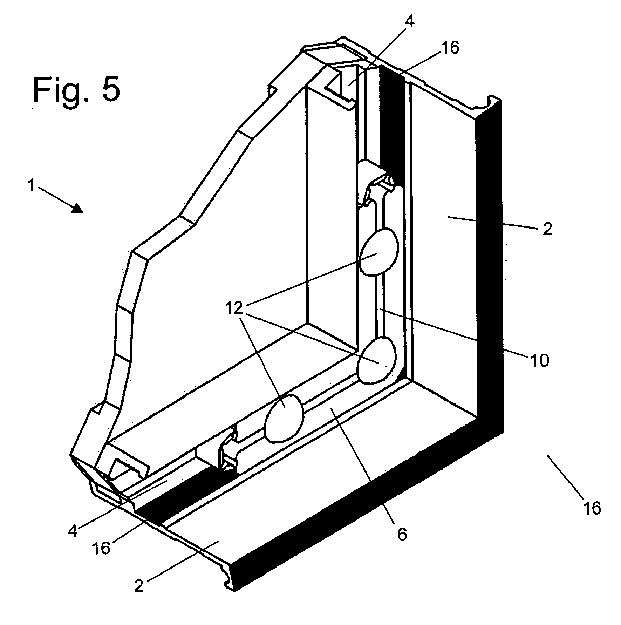

Fig. 5 zeigt eine perspektivische Ansicht eines Ausschnitts einer zweiten Ausführungsform des erfindungsgemäßen Montagesystems. Dabei sind zwei Profilstäbe 2 unter 90 Grad zueinander derart angeordnet, dass sie einen flachen Körper 30 halten. Die beiden Profilstäbe 2 werden durch ein winkelförmiges Verbindungselement 6 miteinander fest verbunden. Spreizelemente 12 sind an drei Stellen in die Dehnungsfuge 10 des Verbindungselementes 6 zur Verklemmung eingeführt, zwei jeweils an den Schenkeln und eines im Eckbereich des Verbindungselementes 6. In der hier dargestellten zweiten Ausführungsform sind die Profilstäbe 2 an den zu verbindenden Enden um 45 Grad, den halben Verbindungswinkel, abgeschrägt. Durch diese Abschrägung ergibt sich eine schräge Öffnungsfläche des Klemmkanals 4, in die bei Zusammenbau des Montagsystems 1 das winkelförmige Verbindungselement 6 eingeführt wird. Sobald die Profilstäbe 2 passgenau zueinander angeordnet sind, kann bei der Montage mit dem Anbringen der Spreizelemente 12 in die Öffnungen der Dehnungsfuge 10 begonnen werden. Je nach Länge der Schenkel des winkelförmigen Verbindungselementes 6 können auch mehrere Verbreiterungen zum Anbringen der Spreizelemente 12 in der Dehnungsfuge 10 ausgebildet sein. Des Weiteren ist die Verbreiterung im Eckbereich der Dehnungsfuge 10 optional.

Wie bei der ersten Ausführungsform weisen die Klemmkanäle 4 auf ihren Seitenflächen 16 eine erste Riffelung 18 in Längsrichtung und das Verbindungselement 6 auf seinen Klemmaußenflächen 8 eine zweite Riffelung 20 auf.

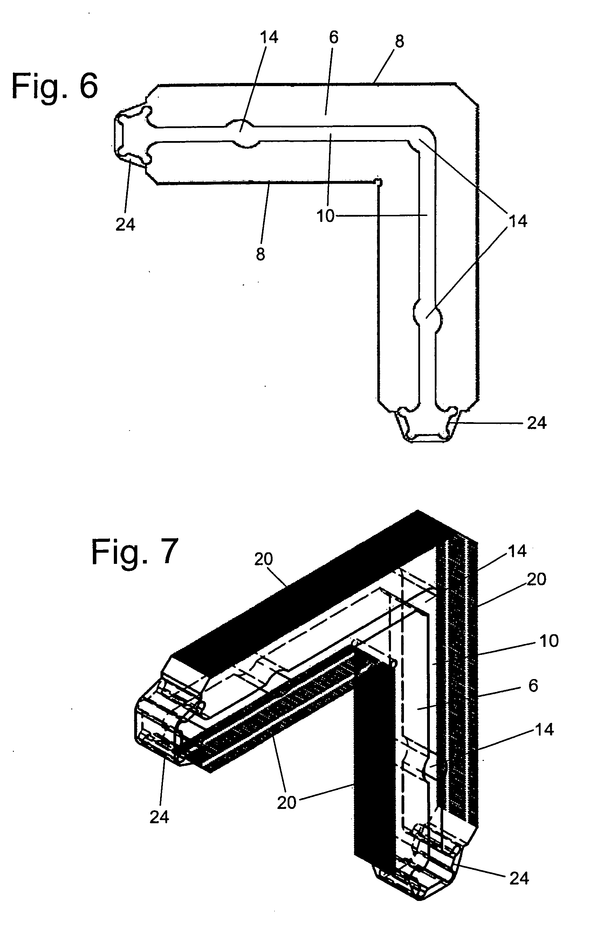

Fig. 6 zeigt das in der zweiten Ausführungsform aus Fig. 5 verwendete winkelige Verbindungselement 6 in Seitenansicht. Ähnlich der ersten Ausführungsform sind die Verbreiterungen der Dehnungsfuge 14 auf den Schenkeln bezüglich der entsprechenden Dehnungsfugenlängsachse asymmetrisch zueinander versetzt, so dass das Einführen eines Spreizelementes 12 in die Öffnungen 14 auf jedem Schenkel aufgrund der zusätzlichen Horizontalkomponente der Klemmkraft für ein gegenläufiges Verklemmen der Klemmaußenflächen 8 mit den Seitenflächen 16 des Klemmkanals 4 sorgt. Die an den Stirnseiten des winkelförmigen Verbindungselementes 6 ausgebildeten dehnbaren Abschlusselemente 24 sind geeignet, diese gegenläufigen Klemmbewegungen durch elastische Verformung aufzunehmen, ohne dass ein Verlust der Festigkeit auftritt.

Fig. 7 zeigt eine perspektivische Ansicht des in Fig. 6 dargestellten winkeligen Verbindungselementes 6 der zweiten Ausführungsform des erfindungsgemäßen Montagesystems. Gut erkennbar ist die zweite Riffelung 20 auf den Klemmaußenflächen 8 des Verbindungselementes 6. Zu den Einzelheiten der zweiten Riffelung 20 an den Klemmaußenflächen 8 des Verbindungselementes wird auf die Ausführungen zu Fig. 4 verwiesen.

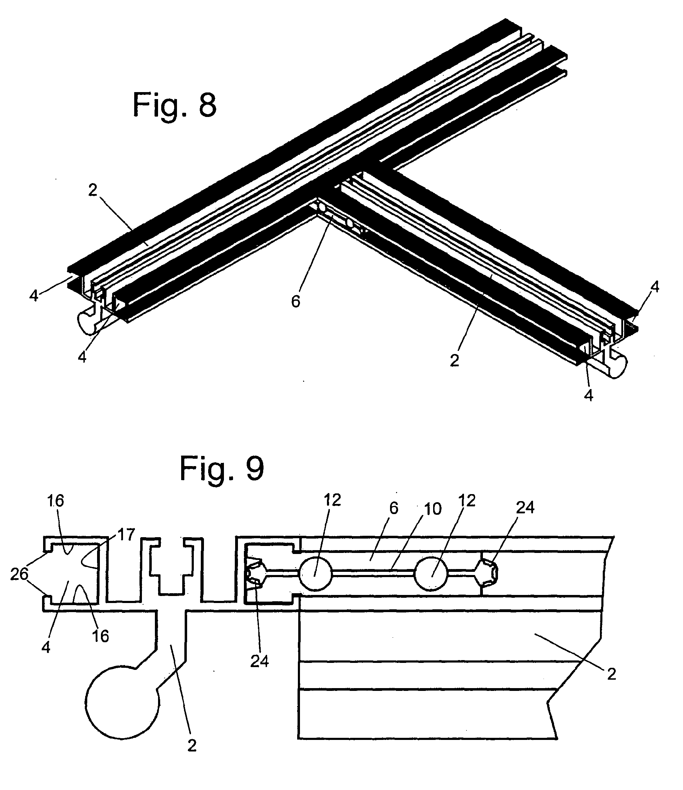

Fig. 8 zeigt eine perspektivische Darstellung einer dritten Ausführungsform des erfindungsgemäßen Montagesystems 1. Dabei stoßen - anders als bei den zuvor geschilderten Ausführungsformen - die beiden Profilstäbe 2 nicht mit ihren Stirnflächen aneinander, sondern es ist ein Profilstab mit seiner Stirnfläche im Wesentlichen rechtwinklig zu dem zweiten Profilstab 2 in einer T-Form angeordnet, wobei die Stirnfläche des ersten Profilstabs 2 passend zur Öffnung des Klemmkanals 4 des zweiten Profilstabs 2 ausgerichtet ist. In der in Fig. 8 dargestellten Ausführungsform weist der erste Profilstab 2 zwei Klemmkanäle 4 auf, die beide demselben Klemmkanal 4 des zweiten Profilstabs 2 gegenüber stehen. Das Verbindungselement 6 ist zur Verbindung der beiden Profilstäbe 2 zum Großteil in dem Klemmkanal 4 des ersten Profilstabs 2 von seiner Stirnseite her eingeführt und ragt um eine Länge aus dem Klemmkanal des ersten Profilstabs 2 heraus, die in etwa der Tiefe des Klemmkanals 4 des zweiten Profilstabs 2 entspricht. Dieses herausstehende Ende des Verbindungselementes 6 ist in dem Klemmkanal 4 des zweiten Profilstabes 2 derart eingeführt, dass das Verbindungselement 6 und der zweite Profilstab 2 im Wesentlichen senkrecht zueinander angeordnet sind. Die Einzelheiten der Klemmung sind in den nachfolgenden Ausführungen beschrieben.

Fig. 9 zeigt eine Seitenansicht der in Fig. 8 dargestellten dritten Ausführungsform des erfindungsgemäßen Montagesystems. Die Verklemmung und damit die feste Verbindung zwischen den beiden Profilstäben 2, die unter 90 Grad zueinander angeordnet sind, erfolgt über das Verbindungselement 6, das im Klemmkanal 4 des ersten Profilstabes 2 der Länge nach und im Wesentlichen senkrecht im Klemmkanal 4 des zweiten Profilstabes 2 angeordnet ist. Die Spreizelemente 12 sind derart angeordnet, dass ein einfacher Zugang zum Zwecke der Klemmung möglich ist. Das eine Spreizelement 12 ist jedoch so nahe wie möglich am Ende des Klemmkanals 4 des ersten Profilstabs 2 angeordnet, um die Klemmwirkung zu maximieren. Das freistehende Ende des Verbindungselementes 6 wird seitlich in den Verbindungskanal 4 des zweiten Profilstabes 2 eingeführt. Für eine Führung sorgen insbesondere die Vorsprungsleisten 26 des Klemmkanals 4, die in eine beidseitig angebrachte Nut 28 auf dem Verbindungselement 6 eingreifen.

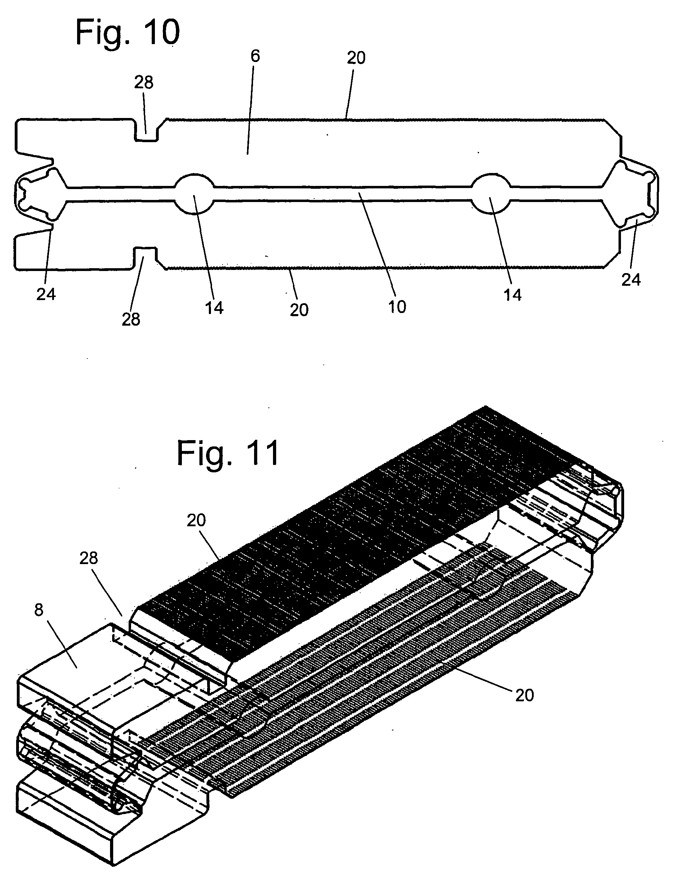

Nachfolgend wird unter Bezugnahme auf Fig. 10 das Verbindungselement 6 der dritten Ausführungsform des erfindungsgemäßen Montagesystems erläutert. Bei dem Verbindungselement 6 der dritten Ausführungsform sind die Verbreiterungen der Dehnungsfuge 10, die zu den Öffnungen 14 führen, symmetrisch bzgl. der Dehnungsfugenachse angeordnet. Dies hat zur Folge, dass sich im Wesentlichen lediglich eine vertikale Komponente der Klemmkraft ausbildet. Das dehnbare Abschlusselement 24 ist an der einen Kopfseite des Verbindungselementes 6 derart ausgebildet, dass es bzgl. der Klemmaußenflächen nicht vorsteht. Dadurch wird gewährleistet, dass das Hineinragen des Verbindungselementes 6 in den Klemmkanal 4 des zweiten Profilstapels 2 ein maximales Anliegen der Klemmaußenflächen 8 an den Seitenflächen 16 des Klemmkanals 4 ergibt.

Fig. 11 zeigt eine perspektivische Darstellung des in Fig. 10 abgebildeten Verbindungselements der dritten Ausführungsform des erfindungsgemäßen Montagesystems. Gut erkennbar ist, dass die Klemmaußenflächen 8 zwischen dem Kopfende des Verbindungselementes und der Nut 28 nicht mit einer Querriffelung versehen sind, was eine Verschiebung des ersten Profilstabes 2 entlang des Klemmkanals 4 des zweiten Profilstabs ermöglicht. Eine zweite Riffelung 20 der Klemmaußenflächen ist in der hier dargestellten Ausführungsform lediglich jenseits der Nut 28 vorhanden. Dadurch wird wie oben erläutert eine optimale Verbindungswirkung zwischen dem Verbindungselement 6 und dem Klemmkanal 4 des ersten Profilstabes 2 gewährleistet.

Bei allen hier dargestellten Ausführungsformen ist es vorteilhaft, wenn die Spreizelemente von der Mitte der Verbindungselemente her in die Öffnungen zum Einführen der Spreizelemente eingepresst werden. Dies ergibt sich, da die notwendige Aufweitungskraft der Dehnungsfuge zur Mitte des Verbindungselementes hin, d.h. möglichst weit weg von den dehnbaren Schlusselementen, am geringsten ist.

Bezüglich der Riffelung der Klemmaußenflächen des Verbindungselementes bzw. der Seitenflächen des Klemmkanals ist anzumerken, dass diese auch in anderen Richtungen als in Quer- bzw. Längsrichtung erfolgen kann. Insbesondere ist es nicht notwendig, dass die Riffelungen einen 90°-Winkel bilden. So ist z.B. eine 60°-Riffelung der Seitenflächen des Klemmkanals und der Klemmaußenflächen des Verbindungselementes möglich.

Mit dem erfindungsgemäßen Montagesystem lässt sich eine Vielzahl von flachen Körpern halten, je nach Ausgestaltung der Profilstäbe, wodurch sich insgesamt ein Flächentragelement ergibt. Damit ist das erfindungsgemäße Montagesystem für eine Vielzahl von flachen Körpern einsetzbar, insbesondere für Fotovoltaikmodule, die ein hohes Gewicht aufweisen und die aufgrund der Anordnung im Freien einer starken Belastung ausgesetzt sind. Andere beispielhafte flache Körper, die von dem erfindungsgemäßen Montagesystem gehalten werden können, sind LCD-Panels, Spezialglasscheiben und dergleichen.

## Patentansprüche

1. Montagesystem (1) mit
mehreren miteinander verbundenen Profilstäben (2), die jeweils mindestens einen nach außen offenen Klemmkanal (4) mit einer Bodenfläche und zwei Seitenflächen (16) aufweisen,
einem länglichen oder abgewinkelten Verbindungselement (6), das zwei gegenüberliegende, zumindest abschnittsweise gerade Klemmaußenflächen (8) und eine sich zwischen den Klemmaußenflächen (8) erstreckende Dehnungsfuge (10) aufweist und in den Klemmkanal (4) eingeführt ist, und
mindestens einem Spreizelement (12), das in zumindest einen Abschnitt der Dehnungsfuge (10) derart eingebracht ist, dass die Klemmaußenflächen (8) des Verbindungselements mit den Seitenflächen (16) des Klemmkanals (4) mindestens eines Profilstabs (2) verklemmt sind.

2. Montagesystem (1) nach Anspruch 1, **dadurch gekennzeichnet, dass** die Dehnungsfuge (10) abschnittsweise verbreitert ist und dort Öffnungen (14) zum Einführen der Spreizelemente (12) bildet.

3. Montagesystem (1) nach Anspruch 1 oder 2, **dadurch gekennzeichnet, dass** die Seitenflächen (16) des Klemmkanals (4) zumindest teilweise eine erste Riffelung (18) aufweisen und die Klemmaußenflächen (8) des Verbindungselements (6) zumindest teilweise eine zweite Riffelung (20) aufweisen, die quer zur ersten Riffelung (18) verläuft, so dass durch das Verklemmen eine Art dauerhafter Kaltschweißverbindung zwischen den Seitenflächen (16) des Klemmkanals (4) und den Klemmaußenflächen (8) des Verbindungselements (6) gebildet ist.

4. Montagesystem (1) nach einem der vorhergehenden Ansprüche, **dadurch gekennzeichnet, dass** das Spreizelement (12) als Spreizniet, Kerbnagel oder Schraube ausgebildet ist.

5. Montagesystem (1) nach einem der vorhergehenden Ansprüche, **dadurch gekennzeichnet, dass** das Spreizelement (12) aus Edelstahl ausgebildet ist.

6. Montagesystem (1) nach einem der vorhergehenden Ansprüche, **dadurch gekennzeichnet, dass** die Profilstäbe (2) und das Verbindungselement (6) aus Aluminium ausgebildet sind.

7. Montagesystem (1) nach einem der vorhergehenden Ansprüche, **dadurch gekennzeichnet, dass** das Verbindungselement (6) an den Stirnseiten ein dehnbares Abschlusselement (24) aufweist, das die Dehnungsfuge überdeckt.

8. Montagesystem (1) nach einem der vorhergehenden Ansprüche, **dadurch gekennzeichnet, dass** die Profilstäbe (2) an den zu verbindenden Enden um 45° abgeschrägt und winkelig aneinandergereiht sind und dass das Verbindungselement (6) als winkelförmiges Verbindungselement (6) ausgebildet ist.

9. Montagesystem (1) nach einem der Ansprüche 1 bis 7, **dadurch gekennzeichnet, dass** zwei Profilstäbe (2) mit geraden Enden senkrecht miteinander verbunden sind und mindestens ein Profilstab (2) zwei gegenüberliegende, in den Klemmkanal (4) hineinragende Vorsprungsleisten (26) aufweist, die in eine Nut (28) eingreifen, welche im Bereich der Klemmaußenflächen (8) angeordnet sind.

10. Flächentragelement mit einem Montagesystem (1) nach einem der Ansprüche 1 bis 9 und einem in den Profilstäben (2) gelagerten flachen Körper (30), vorzugsweise einem Solarpanel.
